Europäisches Patentamt

European Patent Office

Office européen des brevets

(11) Publication number: **0 102 221**
**B1**

# EUROPEAN PATENT SPECIFICATION

(45) Date of publication of patent specification: 02.11.88

(51) Int. Cl.⁴: **G 02 B 5/10, G 02 B 27/18**

(21) Application number: **83304767.3**

(22) Date of filing: **17.08.83**

(54) **An apparatus for projecting luminous lines on an object by a laser beam.**

(30) Priority: 21.08.82 JP 144912/82
22.04.83 JP 71746/83
22.04.83 JP 71747/83

(43) Date of publication of application:
07.03.84 Bulletin 84/10

(45) Publication of the grant of the patent:
02.11.88 Bulletin 88/44

(84) Designated Contracting States:
AT BE CH DE FR GB IT LI NL SE

(56) References cited:
GB-A- 354 843
US-A-4 192 578
US-A-4 374 365

(73) Proprietor: Ozaki, Yasuto
22-2, Horen-cho
Nara (JP)

(72) Inventor: Ozaki, Yasuto
22-2, Horen-cho
Nara (JP)

(74) Representative: Smith, Philip Antony et al
REDDIE & GROSE 16 Theobalds Road
London WC1X 8PL (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 102 221

**Description**

The present invention relates to an apparatus for projecting luminous lines by the use of a laser source. More particularly, the present invention relates to an apparatus for projecting lines of light by diverging a laser beam at wide angles, wherein the laser beam is emitted from a single laser source.

It has been the common practice to employ a polygonal mirror rotated at a high speed, on which a laser beam is cast so as to reflect same in desired directions. However, this arrangement calls for a complicated device whereby the mirror is rotated at a high speed. In addition, it is not applicable when information must be transmitted at a high speed to electronic appliances, because the divergence of the laser beams is only derived from the running reflection points on the mirror. There is another device known in the art, in which a cylindrical lens is employed to enable the laser beam to refract therethrough at a small angle. However, the application of this device is limited because of the incapability of obtaining a refraction at wide angles.

U.S. Patent Specification No. 4,374,365 describes apparatus having a reflector with a curved reflecting surface for spreading a beam which impinges directly on the reflector from a laser. The reflector in that specification takes the form of a thick-walled cylindrical tube with its axis extending perpendicular to the axis of the laser beam.

An object of the present invention is to provide an apparatus capable of constantly casting a divergent luminous flux at relatively wide angles with the use of a single laser source thereby obtaining clearly distinct lines of light on an object.

Another object of the present invention is to provide an apparatus capable of constantly projecting a plurality of lines of light at predetermined angles.

Other objects and advantages of the present invention will become apparent from the detailed description given hereinafter; it should be understood, however, that the detailed description and specific embodiment are given by way of illustration only, since various changes and modifications will become apparent to those skilled in the art from this detailed description.

The present invention has several applications, among which is marking-off on big objects, such as buildings, bridges, ships, where a large span of marking is required. Another application is a laser radiation, in which the laser beams are radiated into the atmosphere without having an object to be cast on. When the apparatus is designed to be small-sized, it can be used for a laser printer, a facsimile machine and a copying machine. The invention may also find an application in optical communication, in which the apparatus is used to branch a single transmission line into many lines. For more commercial purposes the invention may be used for processing materials, or for display for advertisements or ornamental purposes.

According to the present invention, there is provided an apparatus for projecting luminous lines onto an object by the use of a laser beam, the apparatus comprising a laser and a reflector with a curved reflecting surface for spreading the beam in a plane perpendicular to the reflecting surface, characterized in that the apparatus has means for spreading the laser beam and a condensing lens for forming a broad beam, and the reflecting surface is disposed in the broad beam to reflect parts of the beam through progressively increasing angles proceeding across the width of the beam, thereby spreading the beam into a fan.

A preferred embodiment of the present invention has at least two reflectors located between the laser beam generator and the concave lens, the reflectors intersect each other at right angles, and one of the reflectors includes means for adjusting in the X-direction while the other reflector includes means for adjusting in the Y-direction.

The invention will be described in more detail with the aid of examples illustrated in the accompanying drawings, in which:

Figure 1 is a schematic view exemplifying the structure and operation of the present invention;

Figure 2 is a schematic view exemplifying the operation in greater detail;

Figure 3 is a plan view showing an example of the embodiment according to the present invention;

Figure 4 is a side view of the apparatus of Figure 3;

Figure 5 is a schematic view exemplifying the condition of the luminous lines obtained by the embodiment of Figures 3 and 4;

Figure 6 is a perspective view showing another example of the embodiment;

Figure 7 is a schematic view exemplifying the structure of a further example of the embodiment; and

Figure 8 is a diagrammatic view exemplifying the simulation obtained by the present invention.

A laser beam having a predetermined width is generated by a collimator, which is adapted to obtain a parellel or nearly parallel beam of radiation from a laser beam having no substantial width. Normally the collimator includes a concave lens or a convex mirror whereby the laser beam is widened as desired, and a condensing lens through which parallel rays are produced. Alternatively, a parallel or nearly parallel beam can be obtained by the use of a laser oscillator having a sufficient amplifying ability.

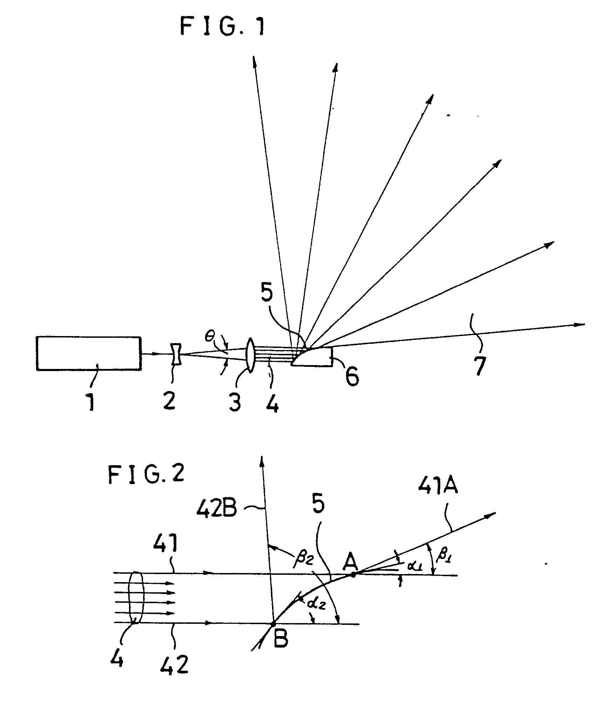

Referring to Figure 1, a He-Ne laser tube 1 produces a red visible ray. A concave lens 2 diverges the laser radiation at an angle θ, and a convex lens 3 condenses the divergent beam radiation toward a reflector 6. The obtained laser beam is designated by the reference numeral 4, which has a diameter of a few millimeters or several tens of millimeters. The reflector 6 has a curved reflecting surface 5, which has reflecting angles continuously changing in one direction alone, that is, in the drawings, in the direction parallel with the paper. The reflecting surface 5 can be shaped in a cylindrical form or in a non-cylindrical

2

form. The concave lens 2 is adjustable forward or backward in its position, thereby adjusting the point of focus. The reflector 6 is mounted on a base (not shown) with the use of a fastener, such as bolts, and the angle of fixture can be adjusted.

Suppose now that the laser beam 4 has the outermost lines of light 41 and 42, hereinafter the former is referred to as the top line and the latter as the bottom line. The top line 41 reflects at Point (A), at an angle $\alpha_1$.

As a result of reflection by $\beta$, i.e. $2\alpha_1$, it becomes a light 41A. The bottom line 42 reflects at Point (B), at an angle $\alpha_2$. Likewise, as a result of reflection by $\beta_2$ i.e. $2\alpha_2$, it becomes a light 42B. In this way the laser beam 4 is widely diverged in the range of $\beta_1$ to $\beta_2$, and changes into a sector-shaped luminous flux 7. When the reflecting surface 5 is made non-spherical, it is possible to control the distribution of strength of reflecting lights by designing the surface variously.

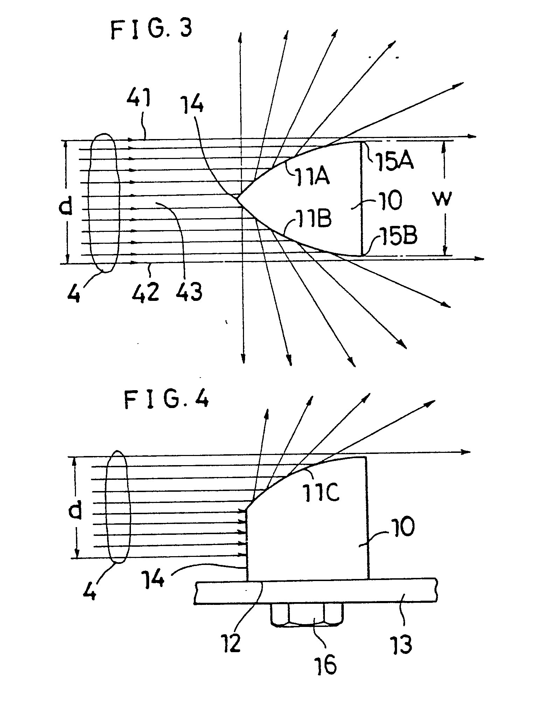

Referring to Figures 3 and 4, a reflector 10 is defined by side curved surfaces 11A and 11B, a top curved surface 11C, an edge 14 and a bottom 12, which is fastened to a base plate 13 by means of a bolt 16. As shown in Figures 2 and 3, each curved surface 11A, 11B and 11C consists of reflecting points arranged so as to enable the light to reflect at different angles in one direction, wherein the lines of reflection on the top curved surface 11C are in planes perpendicular to those including the lines of reflection on the side curved surfaces 11A, 11B. The side curved surfaces 11A and 11B are spaced by a distance (W) at their terminating ends, wherein the distance (W) is made equal to or slightly smaller than, the diameter (d) of the laser beam 4. At each terminating end 15A, 15B of the side curved surfaces 11A and 11B the angle of reflection $\beta$ is zero.

In the embodiment illustrated in Figures 3 and 4 the outermost lines 41 and 42 in the laser beam 4 are free from reflection on the reflector 10 and pass straight over the reflector 10. In contrast, the innermost line 43 is reflected around the edge 14 at the largest angle. As shown in Figure 3, when viewed toward the edge 14, the light reflection on the side curved surfaces 11A and 11B is a single continuous luminous line which diverges from the edge 14 in the right-hand and the left-hand direction. The reflection on the top curved surface 11C is a luminous line perpendicular to those expanding from the side curved surfaces 11A and 11B.

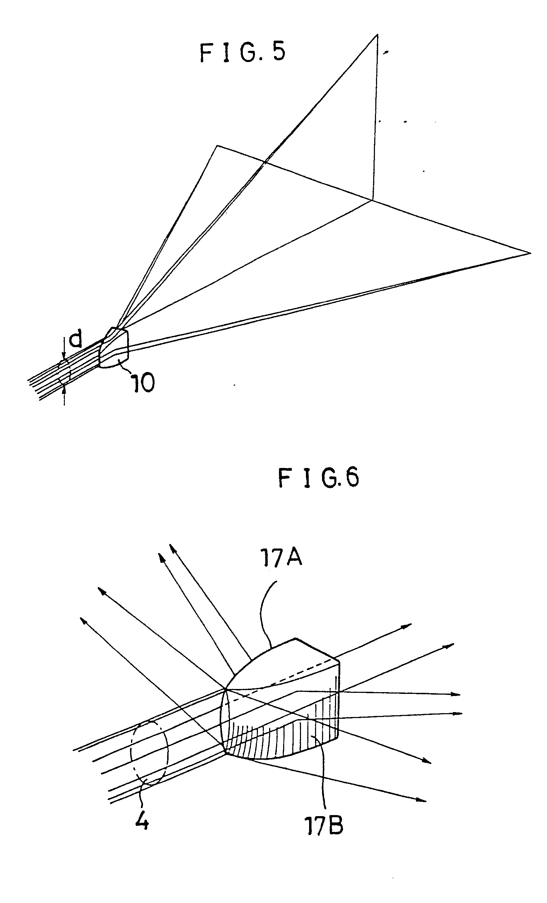

By maintaining both side curved surfaces 11A and 11B perpendicular to the base as shown in Figure 5, the luminous reflections thereon and those on the top curved surface 11C are maintained perfectly horizontal and normal.

When the line of reflection is to be focused on a vast area of an object in a single thin line, it may be doubtful for the apparatus of the present invention to be applicable to achieve it, because of the difference in the distance up to the object between the straight lines of reflection and the reflections expanding in the right-hand and the left-hand directions. However, the spherical aberration of the condensing convex lens 3 is effective to enable these reflections to be focused in a single linear form. More concretely, referring to Figure 3, the reflecting lines of light having small angles with respect to the reflector 10 come from the peripheral portion of the laser beam 4. Whereas, the reflecting lines of light having a large angle around the edge 14 come from the zone from the central part of the laser beam to its peripheral portion, wherein the light from the central part thereof is stronger than that from its peripheral portion. By virtue of this fact the doubt mentioned above is made groundless.

To demonstrate the effects of the apparatus, the mathematical results by means of simulation obtained by a computer are shown in a Table:

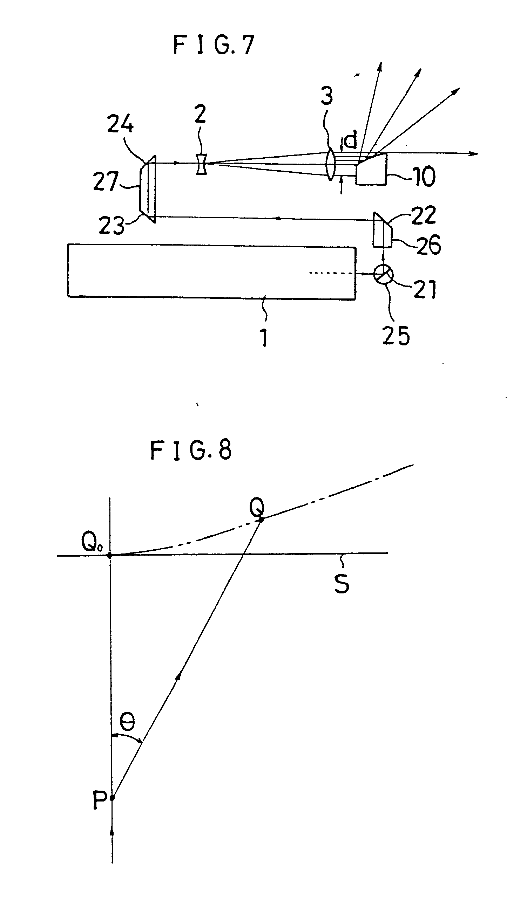

Referring to Figure 8, an angle $\theta$ (rad.) indicates a reflecting angle with respect to the optical axis, F(mm) indicating a distance from the point (P) of the convex lens to the point of focus Q, and B(mm) indicating a width of the luminous lines at the point Q. BT(mm) indicates a width of the luminous lines on an area S of the object, which area of the object passes through the point of focus $Q_0$ on the optical axis, and is additionally perpendicular thereto. The optical conditions provided for the simulation are as follows:

| | |
|---|---|
| Refractive indexes for the concave lens and the convex lens: | N=1.5093 |
| The distance D from the concave lens to the convex lens: | D=134 mm |
| The distance MD from the convex lens to the reflector: | MD=40 mm |
| The radius MR of the reflecting curved surface of the reflector: | MR=50 mm |
| The spherical radius $R_1$ of each side of the concave lens: | $R_1$=10 mm |
| The thickness $M_1$ of the concave lens: (an integer strucutre) | $M_1$=0.5 mm |
| The spherical radius $R_2$ of each side of the convex lens: | $R_2$=145 mm |
| The thickness $M_2$ of the convex lens: (an integer structure) | $M_2$=2 mm |

It will be noted from the table that the values for F increase in accordance with the increase in the angle $\theta$, and that the values for BT remain unchanged regardless of the increase in the angle $\theta$, keeping substantially the same value. This means that the luminous line is uniformly thin, represented in a single sharp line.

TABLE

| θ (rad.) | F (mm) | B (mm) | BT (mm) |
|---|---|---|---|
| 0.00 | 22044.217 | 0.36861 | 0.36861 |
| 0.05 | 22100.054 | 0.36522 | 0.37436 |
| 0.10 | 22267.693 | 0.35506 | 0.39107 |
| 0.15 | 22544.38 | 0.33863 | 0.41729 |
| 0.20 | 22939.034 | 0.31593 | 0.45037 |
| 0.25 | 23448.944 | 0.28778 | 0.48823 |
| 0.30 | 24071.034 | 0.25523 | 0.52466 |
| 0.35 | 24807.487 | 0.21917 | 0.55749 |
| 0.40 | 25649.989 | 0.18107 | 0.58024 |
| 0.45 | 26592.007 | 0.1424 | 0.5875 |
| 0.50 | 27611.293 | 0.10512 | 0.58488 |
| 0.55 | 28681.285 | 0.07113 | 0.5571 |
| 0.60 | 29749.965 | 0.04263 | 0.49704 |
| 0.65 | 30756.166 | 0.02108 | 0.42398 |
| 0.70 | 31613.618 | 0.00723 | 0.34878 |
| 0.75 | 32208.416 | 0.00049 | 0.29277 |
| 0.80 | 32487.07 | 0 | 0.03138 |

Figure 6 shows an alternative embodiment in which the side curved surfaces 17A, 17B are maintained convex, not perpendicular, wherein the degree of convexity becomes large in accordance with the increase in the angles of reflection. This ensures that the reflecting luminous lines are focused on every point on the object facing the projector.

Figure 7 shows another example of the embodiment, in which a unique arrangement is provided so as to guide a laser beam. The unique arrangement consists of a laser guiding path from a laser oscillator 1 up to a concave lens 2. The laser output from the oscillator 1 is reflected on a Y-axis adjusting mirror 21 and an X-axis adjusting mirror 22, and is again reflected on a second mirror unit which consists of two mirror components 23 and 24 crossing each other at right angle. In this way the laser is led to a concave lens 2 and a convex lens 3. The Y-axis adjusting mirror 21 is secured to a pillar 25 capable of rotating around an axis crossing the paper at right angle, and the X-axis adjusting mirror 22 is secured to another pillar 26 capable of rotating around an axis crossing the pillar 25 at right angle. The mirror components 23 and 24 are fixed to each other such that they cross each other at right angle, and they are secured to the pillar 27, which is axially slidable and rotative. Under this arrangement each mirror is adjustable in a desired direction. This reduces the difficulty involved in maintaining the positional relationship between the laser generator and the optical components in an optically precise manner. Instead, the adjustment of each mirror component can achieve the desired incidence of the laser beam on the reflector 10. In addition, as shown in Figure 7, the laser generator and the optical system can be compactly arranged, not in series but in parallel so as to minimize the accommodation space. This is one of the advantages of this embodiment.

**Claims**

1. An apparatus for projecting luminous lines onto an object by the use of a laser beam, the apparatus comprising a laser (1), and a reflector (6) with a curved reflecting surface (5) for spreading the beam in a plane perpendicular to the reflecting surface, characterized in that the apparatus has means (2) for spreading the laser beam and a condensing lens (3) for forming a broad beam (4), and the reflecting surface

**0 102 221**

(5) is disposed in the broad beam (4) to reflect parts of the beam through progressively increasing angles proceeding across the width of the beam, thereby spreading the beam into a fan (7).

2. An apparatus as claimed in claim 1 in which the condensing lens (3) is arranged to focus the beam (4) on to the object on to which the luminous line is to be projected.

3. An apparatus as claimed in claim 1 or 2 in which the reflecting surface (5) is cylindrical.

4. An apparatus as claimed in any of the preceding claims in which the reflector (10) has two curved reflecting surface (11A, 11B) positioned symmetrically with respect to a plane containing the optical axis of the beam (43) to divide the beam (43) into two fan-shaped components.

5. An apparatus as claimed in claim 4 in which the reflector (10) has a third reflecting surface (11) to form a third fan beam in a plane perpendicular to the plane of the two fan-shaped components formed by the said two reflecting surfaces (11A, 11B).

6. An apparatus as claimed in any of the preceding claims, in which the light path between the laser (1) and the means (2) for spreading the laser beam is bent successively by at least two reflectors (21, 22) which are adjustable to control the position of the beam relative to the spreading means (2).

7. Apparatus as claimed in any of claims 1 to 6 in which the beam-spreading means (2) is a divergent lens.

**Patentansprüche**

1. Gerät zum Projizieren von Leuchtspuren auf ein Objekt mittels eines Laserstrahls, wobei zu dem Gerät ein Laser (1) und ein Reflektor (6) mit gekrümmter Oberfläche (5) zum Zerstreuen des Strahls in einer zu der reflektierenden Fläche rechtwinkligen Ebene gehören, dadurch gekennzeichnet, daß das Gerät eine Einrichtung (2) zum Zerstreuen des Laserstrahls und eine Sammellinse (3) zum Ausbilden eines breiten Strahls (4) aufweist und daß die reflektierende Fläche (5) in dem breiten Strahl (4) angeordnet ist, um Teile des Strahls über die Breite des Strahls fortschreitend unter zunehmend größeren Winkeln zu reflektieren, so daß der Strahl zu einem Fächer (7) ausgebreitet wird.

2. Gerät nach Anspruch 1, dadurch gekennzeichnet, daß die Sammellinse (3) so angeordnet ist, daß der Strahl (4) auf dem Objekt fokussiert wird, auf welches die Leuchtspur projiziert werden soll.

3. Gerät nach Anspruch 1 oder 2, dadurch gekennzeichnet, daß die reflektierende Fläche (5) zylindrisch ist.

4. Gerät nach einem der vorhergehenden Ansprüche, dadurch gekennzeichnet, daß der Reflektor (10) zwei gekrümmte reflektierende Flächen (11A, 11B) aufweist, die hinsichtlich einer die optische Achse des Strahls (43) enthaltenden Ebene symmetrisch angeordnet sind, um den Strahl (43) in zwei fächerförmige Teile aufzuteilen.

5. Gerät nach Anspruch 4, dadurch gekennzeichnet, daß der Reflektor (10) eine dritte reflektierende Fläche (11) aufweist, um einen dritten Fächerstrahl in einer zu der Ebene der beiden durch die erwähnten beiden reflektierenden Flächen (11A, 11B) gebildeten fächerförmigen Teile rechtwinkligen Ebene auszubilden.

6. Gerät nach einem der vorhergehenden Ansprüche, dadurch gekennzeichnet, daß der Lichtweg zwischen dem Laser (1) und der Einrichtung (2) zum Zerstreuen des Laserstrahls nacheinander durch mindestens zwei Reflektoren (21, 22) abgelenkt wird, die einstellbar sind, um die Position des Strahls gegenüber der Zerstreuungseinrichtung (2) einzustellen.

7. Gerät nach Anspruch 1 bis 6, dadurch gekennzeichnet, daß die Strahlzerstreuungseinrichtung (2) eine Zerstreuungslinse ist.

**Revendications**

1. Appareil pour projeter des lignes lumineuses sur un objet à l'aide d'un laser, cet appareil comprenant un laser (1) et un réflecteur (6) présentant une surface réfléchissante (5) incurvée pour étaler le faisceau dans un plan perpendiculaire à la surface réfléchissante, caractérisé en ce que l'appareil comprend des moyens (2) pour élargir le faisceau laser et une lentille condensatrice (3) pour former un faisceau large (4), et la surface réflectrice (5) est disposée sur le faisceau large (4) pour réfléchir des parties de celui-ci selon des angles qui augmentent progressivement quand on avance transversalement par rapport à la largeur du faisceau, ce qui étale ledit faisceau en formant un éventail.

2. Appareil selon la revendication 1, dans lequel la lentille condensatrice (3) est disposée pour focaliser le faisceau sur l'objet sur lequel on veut projeter la ligne lumineuse.

3. Appareil selon la revendication 1 ou 2, dans lequel la surface réfléchissante est cylindrique.

4. Appareil selon l'une des revendications précédentes, dans lequel le réflecteur (10) présente deux surfaces réfléchissantes incurvées (11A, 11B), placées symétriquement par rapport à un plan contenant l'axe optique du faisceau (43), de façon à diviser le faisceau (43) en deux éléments en forme d'éventail.

5. Appareil selon la revendication 4, dans lequel le réflecteur (10) présente une troisième surface réflectrice (11) pour former un troisième faisceau en éventail perpendiculaire au plan des deux éléments en éventail formés par les deux surfaces réfléchissantes (11A, 11B) précitées.

6. Appareil selon l'une des revendications précédentes, dans lequel le trajet lumineux entre le laser (1) et les moyens (2) pour disperser le faisceau est coudé successivement par au moins deux réflecteurs (21,

5

**0 102 221**

qui sont réglables pour commander la position du faisceau par rapport aux moyens d'élargeissement (2).

7. Appareil selon l'une des revendications 1 à 6, dans lequel les moyens (2) d'élargissement du fasiceau sont constitués par une lentille divergente.

6

FIG. 1

FIG.2

FIG. 3

FIG. 4

FIG. 5

FIG.6

17A

17B

4

10

d

## F I G. 7

## F I G. 8

4